# EUROPEAN PATENT APPLICATION

(11) **EP 2 085 418 A1**
(43) Date of publication of application: **05.08.2009**
(21) Application number: 07792769.7
(22) Date of filing: 21.08.2007
(51) Int. Cl.: C08G 63/91, G03G 9/087

(54) **HYPERBRANCHED ESTER POLYMER, AND ELECTROPHOTOGRAPHIC TONER AND PIGMENT MASTER BATCH USING THE POLYMER**

(30) Priority: 13.11.2006 JP 2006306290; 26.02.2007 JP 2007045366
(71) Applicant: Toyo Boseki Kabushiki Kaisha, Osaka-shi, Osaka 530-8230 (JP)
(72) Inventor: HAMASAKI, Ryo, Ohtsu-shi Shiga 520-0292 (JP); TANAKA, Hideki, Ohtsu-shi Shiga 520-0292 (JP); HOTTA, Yasunari, Ohtsu-shi Shiga 520-0292 (JP)
(74) Representative: Weber, Thomas
(86) International application number: PCT/JP2007/066157
(87) International publication number: WO 2008/059645

(57) **Abstract**

[PROBLEMS] To produce a hyper-branched polymer having excellent resin strength, a good anti-blocking property and less environmental dependence. [MEANS FOR SOLVING PROBLEMS] Disclosed is a hyper-branched ester polymer which is modified with a rosin. Preferably, the polymer has a number average molecular weight of 1,000 to 60, 000, a hydroxyl value of 2 to 450 mg KOH/g, an acid value of 1 to 70 mg KOH/g, a glass transition temperature of 30°C or higher.

## Description

### Technical Field of the Invention

The present invention relates to a rosin-modified hyper-branched polymer having excellent strength, good anti-blocking property and little dependency on environments. Toner which is prepared using the rosin-modified hyper-branched polymer of the present invention has a good stability of the charge amount in environment while good heat-resisting storability and mechanical strength are still maintained and, moreover, due to its specific structure, a toner which has very good fixing property at low temperature as compared with the conventional resins can be achieved. The present invention further relates to a pigment master batch of a hyper-branched polymer type.

### Background Art

Hyper-branched polymer is a polymer which grows together with repeated branching during the polymerization as a highly branched polymer and is different from the linear polymer (including a polymer where multifunctional components are copolymerized at low concentrations; hereinafter, said term stands for the same meaning) which has been widely used already. Although the hyper-branched polymer has a terminal group outside the resin in high concentrations, it is not gelled but shows a thermoplastic property.

It has been known that a hyper-branched polymer can be synthesized by polymerization of a molecule of an ABₓ (x is an integer of not less than 2) type (Nonpatent Documents 1 and 2). In the formula, A and B are organic groups having each different functional groups "a" and "b" and the functional groups "a" and "b" can chemically conduct condensation reaction and addition reaction each other. It has been also known that, upon polymerization of ABₓ, a molecule of an AB type (a compound having each one of organic groups A and B in a molecule) is copolymerized.

It has been further known that a hyper-branched polymer is produced by an equimolar reaction of A₂ (a compound having two organic groups A in a molecule) with B₃ (a compound having three organic groups B in a molecule). In that case, when the initial reaction of A₂ with B₃ proceeds quicker than the reaction which takes place thereafter, a hyper-branched structure is formed and it has been also reported that, depending upon the reaction condition, gelling easily takes place (Nonpatent Document 3).

It has been still further known that a hyper-branched polymer is produced by the reaction of A₂ with B'B₂ (a compound having one organic group B' and two organic groups B in a molecule where B' does not react with B while it reacts with A; reactivity of B' and that of B with A are different from each other) (Nonpatent Document 4).

As to a hyper-branched polymer, there is described, in Patent Document 1 and Patent Document 2, a hydroxyl-terminated polyester prepared from a material having two hydroxyl groups and one carboxylic acid group in a molecule such as dimethylolpropionic acid. Hyper-branched polymer of an aromatic polyester type has been known as well (Patent Document 3).

However, when a hyper-branched polymer is prepared using an aliphatic material such as dimethylolpropionic acid mentioned in Patent Documents 1 and 2, there is a problem in a handling property and an anti-blocking property because of its low glass transition temperature. In addition, since there are many functional groups such as hydroxyl group at the terminal, there is a risk that, under an environment of high humidity, hygroscopic property increases and various physical properties are affected by that. Therefore, it is very meaningful to increase glass transition temperature of the hyper-branched polymer of an ester type prepared by the use of an aliphatic material and to block the functional group at the terminal.

It is also characteristic that the hyper-branched polymer shows little interaction between molecules and its fused product has low viscosity but, on the other hand, there is a problem of brittleness as compared with the linear polymer. Therefore, it is a very effective means in view of enhancing the resin strength to make molecular weight high and further to make molecular weight distribution broad within such an extent that the characteristic of the hyper-branched polymer is not deteriorated. However, since molecular structure expands from the center to the outside in the hyper-branched polymer, a cross-linking reaction happens at the molecular terminal site of the outside when the molecular weight is made too high whereby gelling reaction often happens. Therefore, a means for the production of a high-molecular hyper-branched polymer has not been well established yet at present.

In Patent Document 4, there is shown an example where the characteristic of the hyper-branched polymer that interaction between molecules is weak and viscosity is low as compared with the linear polyester is utilized and the hyper-branched polymer is applied for the use as a toner. However, the hyper-branched polymer used in Patent Document 4 is an aliphatic hyper-branched polymer whereby its glass transition temperature is low and number-average molecular weight and weight-average molecular weight are also small. Therefore, when this polymer is to be used as a toner, the resulting anti-blocking property and resin strength are very poor as mentioned above. Moreover, since the polymer has many hydroxyl terminal groups, there is an anxiety that it may badly affect the stability in the charged environment as a toner whereby it should be concluded that the hyper-branched polymer used in Patent Document 4 is not suitable in the use as a toner.

On the other hand, rosin is a general name for lowly volatile resin acids prepared from trees and the main ingredient thereof is a substance derived from natural substances including abietic acid which is a kind of tricyclic diterpene and isomers thereof. Since rosin is easily available being derived from natural sources and is relatively less expensive, it has been also widely utilized in industrial field such as a pigment dispersing agent and surface treating agent for paper or resin for inks and paints.

An example of other uses of rosin is a toner material. In Patent Document 5, there is a report for an attempt to use rosin as a dispersing agent for a coloring agent but there is a limitation for its adding amount due to the problems in durability and fluidity. On the other hand, attempts for using the resin into which a rosin skeleton is introduced as a binder are also reported (Patent Documents 6 and 7). However, in those reports, there are problems that the adding amount of the resin to a binder into which a rosin skeleton is introduced is small due to the problems of durability and fluidity and that a fixing temperature set therefor is high whereby there has been a demand for a binder for an electrophotographic toner which can be used at lower fixing temperature.

### (Nonpatent Documents)

1. P. J. Flory (co-authored by Shouten Oka and Kisou Kanamaru), Macromolecular Chemistry, chap. 9, MARUZEN Co., Ltd. (1956)
2. Koji Ishizu, Nanotechnology in Branched Polymers, chap.6, Industrial Publishing & Consulting, Inc. (2000)
3. M. Jikei, S. H. Chon, M. Kakimoto, S. Kawauchi, T. Imase and J. Watanabe, Macromolecules, 1999, 32, 2061.
4. D. Yan and C. Gao, Macromolecules, 2000, 33, 7693. (Patent Documents)
1. U.S. Patent Publication No. 3,669,939
2. Japanese Patent Gazette (JP-B) No. 2574201
3. Japanese Patent Application Laid-Open (JP-A) No. 214083/93
4. Japanese Patent Application Laid-Open (JP-A) No. 2006-274138
5. Japanese Patent Application Laid-Open (JP-A) No. 307419/98
6. Japanese Patent Application Laid-Open (JP-A) No. 2003-322997
7. Japanese Patent Application Laid-Open (JP-A) No. 2006-292820

On the other hand, a pigment master batch is such a thing where a pigment is previously dispersed in the resin in high concentrations for a purpose of coloring the resin such as polyester resin, polyurethane resin, polyamide resin, polycarbonate resin, phenol resin, acrylic resin, styrene-acrylic resin, styrene-butadiene copolymer or polystyrene. The pigment master batch is used for preparing an aimed product by blending with a master batch of other component or the resin containing no pigment. The master batch has been used in wide uses such as molding, coating, adhesion or toner for improving broad applicability, cost, handling property or dispersing property.

For example, a pigment master batch to be used for toner is reported in Patent Document 8. In Patent Document 8, saturated polyester having a broad molecular weight distribution comprising tri- or multi- functional cross-linking components is used as a main binder resin. It is mentioned to be preferred that the resin used for the pigment master batch has the same composition as the binder resin and that the resin is mainly composed of a saturated polyester having lower molecular weight.

However, the pigment master batch using the technology of Patent Document 8 is merely **characterized in that** the resin having the same composition as a binder resin and having a low molecular weight is used and it can hardly be said that the dispersibility of the pigment is significantly improved. In addition, when a resin which is different from the resin used for the pigment master batch is used as a binder resin or particularly when aliphatic polyester resin, polycaprolactone resin or polylactic acid resin is used, problems such as uneven color or poor luster sometimes happen. Thus, in the technology of Patent Document 8, the resin used for the pigment master batch is limited to the composition which is the same as that for the binder resin whereby broad applicability is poor and significant improvement in pigment dispersibility cannot be achieved. Therefore, there has been a demand for the resin having high pigment dispersibility independent of the composition of the binder resin.

It has been known that a hyper-branched polymer has weak interaction between molecules and low viscosity as compared with a linear polymer. In addition, the hyper-branched polymer has a characteristic that the pigment dispersibility is very good due to its specific structure (Patent Document 9). Thus, since the hyper-branched polymer has low viscosity and good pigment dispersibility, it is expected to remarkably enhance the pigment concentration and also to significantly improve the productivity when the hyper-branched polymer is used as a resin for pigment master batch. However, the hyper-branched polymer used in Patent Document 9 and the hyper-branched polymer mentioned in Patent Documents 1 and 2 have low molecular weight whereby there is an anxiety for the strength and, moreover, glass transition temperature is low whereby there is a problem in its handling property. Further, since there are many hydroxyl groups at the terminal, there is a risk that the properties of the resin itself change under high humidity. Accordingly, the hyper-branched polymers mentioned in Patent Documents 1, 2 and 9 are not suitable as the resin for the pigment master batch.

(Patent Documents)
   8. Japanese Patent Application Laid-Open (JP-A) No. 268573/98
   9. Japanese Patent Application Laid-Open (JP-A) No. 2005-276401

### Disclosure of the Invention

### Problem that the Invention is to Solve

An object of the present invention is to provide a hyper-branched polymer having excellent strength, good anti-blocking property and little dependency on environments. Another object of the present invention is to provide a pigment master batch of a hyper-branched polymer type having good strength and handling property and showing less dependency on environments.

### Means for Solving the Problem

In order to achieve the above object, the present inventors have carried out extensive studies and investigations and, as a result, they have invented a hyper-branched polymer showing less dependency on environments and having excellent resin strength and anti-blocking property by modifying the hyper-branched polymer with rosin. Thus, to be more specific, the present invention has the following embodiments.

A hyper-branched polymer of an ester type which is
characterized by being modified with rosin.
A toner for electrophotography using the above hyper-branched polymer of an ester type.
A pigment master batch containing at least pigment and the above hyper-branched polymer of an ester type.

### Advantages of the Invention

According to the present invention, a hyper-branched polymer showing less dependency on environments and having excellent resin strength and anti-blocking property is provided. The rosin-modified hyper-branched polymer of the present invention has excellent resin strength, anti-blocking property and pigment dispersibility due to the presence of a rosin skeleton at the terminal while the characteristic of hyper-branched polymer where flowing of resin easily takes place when the temperature becomes higher than the glass transition temperature is still maintained. Accordingly, it shows very good low-temperature fixing property, resin strength, anti-blocking property and stability of the charge amount in environment especially when it is used for a toner.
In addition, the pigment master batch of the present invention has very good pigment dispersibility since a hyper-branched polymer is used as a resin. Further, due to the characteristic inherent to the hyper-branched polymer skeleton that the interaction between molecules is little, its viscosity is low and pigment concentration can be made high and, moreover, kneading with low shear and for short time is possible whereby the productivity can be significantly improved. In addition, due to the fact that kneading with low shear and for short time is possible, the risk where molecular chain of the resin is cleaved during the kneading can be reduced. Further, in the case of the hyper-branched polymer where the terminal functional group is modified with rosin, abietic acid or the like, both resin strength and handling property are excellent and, furthermore, its dependency on the environment is little and it is particularly useful for use as a toner since the functional groups are decreased.

### Best Mode for Carrying Out the Invention

Although there is no particular limitation for the structure of the hyper-branched polymer of the present invention, it is preferred that the structure prepared by polycondensation reaction or polyaddition reaction of the compound of an ABₓ type is used as a main skeleton. Hereinabove, A and B are organic groups having different functional groups from each other and a compound of an ABₓ type means a compound having two different functional groups "a" and "b" in a molecule together. Although the compound as such does not carry out intramolecular condensation and intramolecular addition, it is possible that the functional group "a" and the functional group "b" are subjected to chemical condensation reaction and addition reaction each other. The present invention more specifically relates to a hyper-branched polymer of an ester type and a combination of carboxyl group or derivative thereof with hydroxyl group or derivative thereof is preferred.

Specific examples of the ABₓ type compound include 2,2-dimethylolpropionic acid, 2,2-dimethylolbutanoic acid, diphenolic acid, 5-(2-hydroxyethoxy)-isophthalic acid, 5-acetoxyisophthalic acid, 3,5-bis(2-hydroxyethoxy)benzoic acid, methyl 3,5-bis(2-hydroxyethoxy)benzoate, 4,4-(4'-hydroxyphenyl)pentanoic acid, 5-hydroxycyclohexane-1,3-dicarboxylic acid, 1,3-dihydroxy-5-carboxycyclohexane, 5-(2-hydroxyethoxy)cyclohexane-1,3-dicarboxylic acid and 1,3-(2-hydroxyethoxy)-5-carboxycyclohexane. In view of broad applicability as a material and simplicity of the polymerization reaction step, preferred ones are 2,2-dimethylolpropionic acid and 2,2-dimethylolbutanoic acid.

Among the above, those of a type where an ester bond is produced by the reaction are particularly preferred in view of heat resistance of the resulting hyper-branched polymer and miscibility of the resulting hyper-branched polymer with other resin component and with additive component.

In the above reaction, a compound of an ABₓ type may be solely made to react in the presence of a catalyst for condensation reaction and, at that time, a polyhydroxyl compound, polycarboxylic acid compound or a compound having both of them may be used as a branching point of the hydro-branched polymer molecule. Examples of the above polyhydroxyl compound include various glycol compounds and tri- or multi- functional hydroxyl group-containing compound such as trimethylolpropane, pentaerythritol or dipentaerythritol which have been broadly used as materials for polyester resin as mentioned later. Examples of the polycarboxylic acid compound include various dibasic acids and tri- or multifunctional carboxylic acid compound such as trimellitic acid, pyromellitic acid or benzophenonetetracarboxylic acid which have been broadly used as materials for polyester resin as mentioned later. Examples of the compound having both hydroxyl group and carboxylic acid group include glycolic acid, hydroxylpivalic acid, 3-hydroxy-2-methylpropionic acid, lactic acid, glyceric acid, malic acid and citric acid.

In the hyper-branched polymer of the present invention, the branching point may be introduced using a linear polyester oligomer prepared by the condensation reaction of dibasic acid component with glycolic component or a branched-type polyester oligomer prepared by copolymerization of the above with tri- or multi- functional polycarboxylic acid or polyhydroxyl compound in addition to the compounds mentioned above.

As to the constituting material for the above linear or branched polyester oligomer which can act as a branching point, there may be used broadly applied various kinds of dibasic acid or glycol compound as well as tri- or multifunctional polycarboxylic acid and polyhydroxy alcohol compound. Examples of the dibasic acid compound include an aliphatic dibasic acid such as succinic acid, adipic acid, azelaic acid, sebacic acid or dodecanoic acid; an aromatic dibasic acid such as terephthalic acid, isophthalic acid, orthophthalic acid, 1,2-naphthalenecarboxylic acid or 1,6-naphthalenedicarboxylic acid; and an alicyclic dibasic acid such as 1,2-cyclohexanedicarboxylic acid, 1,4-cyclohexanedicarboxylic acid or 4-methyl-1,2-cyclohexanedicarboxylic acid. In view of the heat resisting characteristic, terephthalic acid, isophthalic acid, orthophthalic acid, 1,2-naphthalenecarboxylic acid and 1,6-naphthalenedicarboxylic acid are preferred, and terephthalic acid, 1,2-naphthalenecarboxylic acid and 1,6-naphthalenedicarboxylic acid are particularly preferred.

Examples of the glycol component include an aliphatic diol such as ethylene glycol, 1,2-propylene glycol, 1,3-propylene glycol, 1,2-butylene glycol, 1,3-butylene glycol, 2,3-butylene glycol, 1,4-butylene glycol, 2-methyl-1,3-propylene glycol, neopentyl glycol, 3-methyl-1,5-pentanediol, 2,2,4-trimethyl-1,3-pentanediol, 2,4-diethyl-1,5-pentanediol, 2-ethyl-1,3-hexanediol, 2,2-dimethyl-3-hydroxypropyl-2',2'-dimethyl-3-hydroxy propanate, 2-n-butyl-2-ethyl-1,3-propanediol, 3-ethyl-1,5-pentanediol, 3-propyl-1,5-pentanediol, 2,2-diethyl-1,3-propanediol or 3-octyl-1,5-pentanediol; an alicyclic glycol such as 1,3-bis(hydroxymethyl)cyclohexane, 1,4-bis(hydroxymethyl)cyclohexane, 1,4-bis(hydroxyethyl)-cyclohexane, 1,4-bis(hydroxypropyl)cyclohexane, 1,4-bis(hydroxymethoxy)cyclohexane, 1,4-bi(hydroxyethoxy)-cyclohexane, 2,2-bis(4-hydroxymethoxycyclohexyl)propane, 2,2-bis(4-hydroxyethoxycyclohexyl)propane, bis(4-hydroxycyclohexyl) methane, 2,2-bis(4-hydroxycyclohexyl)propane or 3(4),8(9)tricycle[5.2.1.0^{2,6}]decanedimethanol; and an aromatic glycol such as an adduct of bisphenol A with ethylene oxide or propylene oxide. Among them, 2,2-dimethyl-3-hydroxypropyl-2',2'-dimethyl-3-hydroxy propanate, 2,2-bis(4-hydroxycyclohexyl)propane, 3(4),8(9)tricycle[5.2.1.0^{2,6}]decanedimethanol, and an adduct of bisphenol A with ethylene oxide or propylene oxide is preferred in view of heat resisting characteristic of the resulting polyester resin and broad applicability as the material.

In addition, examples of the above tri- or multifunctional polycarboxylic acid and polyhydroxy alcohol compound include trimellitic acid, pyromellitic acid, benzophenonetetracarboxylic acid, glycerin, trimethylolpropane, or pentaerythritol etc.

The hyper-branched polymer of the present invention can be produced by a process where water produced by condensation reaction is subjected to an azeotropic dehydration with toluene or xylene or by a process where inert gas is blown into the reaction system and water and monoalcohol produced by the condensation reaction are blown out together with the inert gas or they are evaporated by distillation *in vacuo*. As to the catalyst used for the reaction, there may be used various metal compound such as that of titanium type, tin type, antimony type, zinc type or germanium type or a strongly acidic compound such as p-toluenesulfonic acid or sulfuric acid the same as in the case of the catalyst used for the conventional polyester resin polymerization.

Number-average molecular weight and glass transition temperature of the hyper-branched polymer of the present invention are preferred to be 1,000 to 60,000 and not lower than 30°C, respectively. In order to make the molecular weight and the glass transition temperature of the hyper-branched polymer of the present invention high, the hyper-branched polymer is made to react with rosin. As to a method for the reaction with the rosin, a process where rosin is made to react with the functional group at the terminal of the core part of the hyper-branched structure formed by the condensation of a compound of an ABₓ type is preferred although there is no problem even when the rosin is made to react during the condensation process of the ABₓ type compound.

Examples of the specific component for the rosin used in the present invention include abietic acid, levopimaric acid, palustric acid, neoabietic acid, dehydroabietic acid and dihydroabietic acid and it is preferred to use a thing containing one or more thereof. The rosin used in the present invention may be a mixture thereof, a purified product thereof or a modified product thereof. It is of course no problem at all to use the constituent component itself of rosin such as abietic acid, levopimaric acid, palustric acid, neoabietic acid, dehydroabietic acid and dihydroabietic acid, or a hydrogenated product thereof. It is particularly preferred to use abietic acid or hydrogenated abietic acid. In terms of chemical structure, rosin belongs to a monocarboxylic acid and, as a reactive group, carboxyl group is a representative one. As to the rosin used in the present invention, it is preferred to use the rosin in very light color for the purpose of reducing the coloration.

The hydroxyl value of the rosin-modified hyper-branched polymer of the present invention prepared as such is preferred to be 2 to 450 mg KOH/g. When the hydroxyl value is less than 2 mg KOH/g, it is difficult to conduct an acid-addition modifying reaction which will be mentioned later and pigment dispersibility and stability upon storage when made into a water dispersion cannot sometimes be ensured. On the other hand, when the hydroxyl value is more than 450 mg KOH/g, hygroscopic property becomes high and there is a risk that dependency on the environment may become very high. The hydroxyl value is more preferred to be 1.5 to 350 mg KOH/g, and further preferred to be 2 to 250 mg KOH/g.

The rosin-modified hyper-branched polymer of the present invention may have a carboxyl group in its molecular terminal if necessary. As a result of an appropriate introduction of the carboxyl group into the molecule, there is an advantage that the pigment dispersibility when the hyper-branched polymer of the present invention is used as a binder for fine particle dispersing binder becomes good. Also, there is an advantage that affinity to water when a water dispersion of the resin particles is prepared can be enhanced. As to a method for introducing the carboxyl group into the resin, a method to add an acid anhydride to the terminal hydroxyl group of the hyper-branched polymer is preferred. Examples of the acid anhydride include an aliphatic acid anhydride such as maleic anhydride, itaconic anhydride, malonic anhydride, succinic anhydride, propionic anhydride, methylhimic anhydride, himic anhydride, octenylsuccinic anhydride, pentadodecenylsuccinic anhydride or dodecenylsuccinic anhydride; and alicyclic or aromatic dibasic acid anhydride such as phthalic anhydride, tetrahydrophthalic anhydride, methyltetrahydrophthalic anhydride, hexahydrophthalic anhydride, methylhexahydrophthalic anhydride, methylnadic anhydride, hydrogenated methylnadic anhydride, trialkyltetrahydrophthalic anhydride, styrendostyrenetetrahydrophthalic anhydride, endomethylene tetrahydrophthalic anhydride, methyl endomethylene tetrahydrophthalic anhydride, styrendostyrene tetrahydrophthalic anhydride, tetrabromophthalic anhydride, naphthalene-2,3-dicarboxylic acid anhydride and trimellitic anhydride. Trimellitic anhydride and tetrahydrophthalic anhydride are preferred. It is also possible to use a multifunctional anhydride such as benzophenonetetracarboxylic acid dianhydride, biphenyltetracarboxylic acid dianhydride or cyclohexanetetracarboxylic acid dianhydride. Each of those acid anhydrides may be used solely or two or more thereof may be used jointly.

Acid value of the rosin-modified hyper-branched polymer of the present invention is preferred to be 1 to 70 mg KOH/g, and more preferred to be 1 to 50 mg KOH/g. When the acid value is less than 1 mg KOH/g, there is a risk that stability upon storage when made into a water dispersion lowers. On the other hand, when the acid value is more than 70 mg KOH/g, problems may happen in view of properties of the toner that, if the toner is prepared using the resin of the present invention, hygroscopicity becomes high and stability against charge at high temperature and high humidity becomes bad.

In conducting the reaction of the core part of the hyper-branched skeleton with the rosin or the reaction thereof with an acid anhydride, a catalyst may be used. As to the catalyst, there may be used various metal compound such as titanium type, tin type, antimony type, zinc type or germanium type or an organic sulfonic acid compound such as p-toluenesulfonic acid, methanesulfonic acid, ethanesulfonic acid or xylenesulfonic acid. One of or two or more of the above polymerization catalysts may be used.

Reaction temperature for the above is preferred to be 100 to 300°C, and more preferred to be 150 to 250°C. When it is lower than 100°C, the reaction is time-consuming and that is not economical. On the other hand, when it is higher than 300°C, there is a possibility that decomposition of the hyper-branched polymer and the compound having the reactive group happen.

Number-average molecular weight of the rosin-modified hyper-branched polymer of the present invention is preferred to be not lower than 1,000. When the number-average molecular weight is lower than 1,000, the resin may become brittle. On the other hand, when the number-average molecular weight is higher than 60,000, there is a risk that the miscibility with other resin becomes bad and further that the fused fluidity characteristic becomes bad whereby the characteristic as the hyper-branched polymer may be lost. The range of number-average molecular weight is preferred to be 1,000 to 60,000, and more preferred to be 1,500 to 40,000.

The ratio of the weight-average molecular weight (Mw) to the number-average molecular weight (Mn) of the rosin-modified hyper-branched polymer of the present invention (Mw/Mn) is preferred to be from 2 to 15. When the ratio is more than 15, fusion fluidity may become bad and the fused fluidity characteristic which is intrinsic to the hyper-branched polymer may become bad. Moreover, there is a risk of gelling during the manufacture whereby a stable production may not be possible. On the other hand, when Mw/Mn is less than 2, brittleness as a polymer may become significant. The range of Mw/Mn is preferred to be 4 to 12.

Glass transition temperature of the rosin-modified hyper-branched polymer of the present invention is preferred to be not lower than 30°C. More preferably, the glass transition temperature is preferred to be not lower than 40°C. When it is lower than 30°C, handling property becomes bad and there is a risk that polymers are fused each other during the storage of the polymer. Although there is no particular limitation for the upper limit, it is preferred to be lower than 120°C in view of fixation when the use as a toner is taken into consideration.

There is no problem at all in the rosin-modified hyper-branched polymer of the present invention that it is used by blending with other linear polymer or other hyper-branched polymer within such an extent that the characteristic of the hyper-branched polymer is not deteriorated. Examples of other linear polymer may include polyester resin, polyamide resin, polycarbonate resin, polyurethane resin, phenol resin, acrylic resin, styrene-acrylic resin, styrene-butadiene copolymer and polystyrene. When the hyper-branched polymer is used by blending with other linear polymer, it is preferred that the linear polymer is contained in an amount of not more than 95% by weight, preferably, not more than 80% by weight, and more preferably, not more than 70% by weight in the total resin. When more than 95% by weight of the linear polymer is contained, the characteristic of the hyper-branched polymer may not be achieved.

The rosin-modified hyper-branched polymer of the present invention can be used as a binder for toner. One of the characteristics of the hyper-branched polymer is that flowing of the resin easily takes place when the resin becomes higher than the glass transition temperature. Therefore, when the hyper-branched polymer is used as a resin for toner, fixation at low temperature can be highly improved. In addition, since the hyper-branched polymer is with little interaction between molecules, it is apt to be easily ground. Accordingly, when the hyper-branched polymer of the present invention is used, the grinding property upon manufacture of toner is significantly improved whereby not only the economic effect due to conservation of grinding energy can be expected but also the discharged amount of CO₂ accompanied by the manufacture of toner lowers resulting in reduction in the environmental load.

On the other hand, the rosin-modified hyper-branched polymer of the present invention contains the structure which is derived from the rosin. When the rosin which has been used as a dispersing agent for pigments is introduced into the hyper-branched skeleton, it is now possible that the dispersibility of the pigment is greatly enhanced and that the pigment is filled in the toner in high concentrations. In addition, since the rosin has a bulky structure, when the hyper-branched polymer is modified with rosin, it is now possible to increase the molecular weight of the hyper-branched polymer and also to heighten the glass transition temperature. Thus, it exhibits excellent strength and anti-blocking property as a binder resin for toner. Further, when the terminal functional group of the hyper-branched polymer is made to react with carboxylic acid in the rosin, the terminal functional group can now be blocked. As a result, hygroscopic property lowers and the static stability at high temperature and high humidity is greatly enhanced.

There is no problem at all if and when the rosin-modified hyper-branched polymer of the present invention is used not only as a binder for toner as a main binding agent but also as an additive to other main binding agent. In the rosin-modified hyper-branched polymer of the present invention, flowing of the resin takes place very easily when the temperature becomes higher than the glass transition temperature and, therefore, even when it is used by adding to other main binding agent, fixation of the toner at low temperature can be greatly improved.

In the rosin-modified hyper-branched polymer of the present invention, various functional groups can be introduced thereinto easily and abundantly and, therefore, the polymer can also be used as the so-called charge-controlling resin which stabilizes the electrically charged amount adequately. Further since the rosin-modified hyper-branched polymer of the present invention has very good dispersibility for pigments, it may also be used as a dispersing agent for pigments for a purpose of greatly improving the dispersibility of coloring agent.

When the rosin-modified hyper-branched polymer of the present invention is used for toner as mentioned above, it is now possible to provide a toner being unavailable up to now which exhibits excellent anti-blocking property, resin strength and charge stability at high temperature and high humidity, has advantages of both hyper-branched polymer and rosin and exhibits excellent low-temperature fixing property, pigment dispersibility and grinding property.

When the rosin-modified hyper-branched polymer of the present invention is used as a toner, examples of the coloring agent used for the preparation of toner include known pigments, dyes and carbon black and each of them may be used solely or jointly. As to the pigment, that of benzidine type or azo type, that of azo lake type or quinacridone type and that of phthalocyanine type are preferably used for coloring into yellow, magenta and cyan, respectively. An inorganic pigment such as red oxide, aniline black, Prussian blue, titanium oxide or magnetic powder may be used as well. Examples of carbon black include thermal black, acetylene black, channel black, furnace black and lamp black. As to the dye, that of azo type, nitro type, quinoline type, quinophthaloine type or methine type, that of anthraquinone type, azo type or rhodamine type and that of anthraquinone type are preferably used for coloring into yellow, magenta and cyan, respectively.

When the amount of the coloring agent in the toner for electrophotography is made much more, the image in higher concentration is obtained and offsetting property is better as well although smoothness of the image surface and low-temperature fixing property are deteriorated. The amount of the coloring agent in the toner for electrophotography according to the present invention is preferred to be within a range of 1 to 30 part(s) by weight to 100 parts by weight of the binder resin.

When the rosin-modified hyper-branched polymer of the present invention is used as the resin for toner, the toner particles may contain a releasing agent, a charge-controlling agent and magnetic powder. Particularly when it is used as a full-color toner used in a full-color image forming device and also when it is used in an image-forming device having a fixing equipment of such a type where the amount of releasing oil applied to the fixing member such as roller is reduced, a releasing agent is preferably contained in the toner particles.

Wax is used as a releasing agent. As to the wax, that which has been common in the field of toner for electrostatic image development can be used and examples thereof include wax of a polyolefin type such as polyethylene wax or polypropylene wax and natural wax such as carnauba wax or rice wax as well as montan wax, Fischer-Tropsch wax and paraffin-type wax. When polyester-type wax is used as a binder resin, it is preferred to use the wax of an oxide type in view of improvement in dispersibility.

Adding amount of the releasing agent is preferred to be 0.5 to 12 part(s) by mass, preferably, 1 to 10 part(s) by mass to 100 parts by mass of the binder resin. When two or more kinds of wax are used as a releasing agent, there is no problem provided that their total amount is within the above range.

As to a charge-controlling agent, that which has been known and added for controlling the charging property in the field of toner for electrostatic image development can be used. Examples thereof include fluorine-type surfactant, metal-containing dye such as metal complex of salicylic acid or metal compound of azo type, high-molecular acid such as a copolymer containing maleic acid as a monomer component, quaternary ammonium salt, azine-type dye such as Nigrosine and carbon black. The charge-controlling agent may be used in an amount of 0.01 to 5 part (s) by mass, preferably, 0.05 to 3 part (s) by mass to the total parts by mass of the binder resin used.

As to a method for the preparation of a toner when the rosin-modified hyper-branched polymer of the present invention is used as a toner, there may be used the so-called "grinding method" where coloring agent, charge-controlling agent, fluidity improving agent, grinding aid, etc. are added to the thermoplastic resin followed by kneading, grinding and classifying or the so-called "polymerization method" where fine particles of resin dispersed in a solvent such as water is used as a starting substance, mixed with a dispersion of coloring agent, a dispersion of wax, etc. and subjected to chemical aggregation to prepare aggregated particles and the aggregated particles are fused and combined by heating to give a toner. The toner prepared by the latter method is called a polymerized toner and, since a highly uniform spherical toner having a particle diameter of as small as several microns can be formed, it can be used particularly for making the image quality of color print significantly clear. Moreover, in view of its production, consumption of energy is small because of the chemical manufacturing plant as compared with mechanical energy consumption used in the conventional kneading and grinding method and, in addition, generation of CO₂ can be significantly reduced as well. Further, in the case of being printed, transferring efficiency of the toner to paper is high whereby residual toner decreases and, as a result, consumption of the toner can be suppressed. Furthermore, since the toner is more uniformly transferred to the paper, temperature for fixing can also be made low whereby it has superiority as compared with the grinding method. Thus, when the polymerization toner is prepared using the hyper-branched polymer of the present invention, load on the environment is significantly small and fixing at low temperature is excellent whereby its influence on the industrial world is very great.

An example of a method for manufacturing a polymerization toner using the rosin-modified hyper-branched polymer of the present invention is constituted from a step in which a dispersion of fine particles of coloring agent and a dispersed resin particles formed from the resin of the present invention are mixed, aggregated and fused to prepare the toner particles, a filtering/washing step in which the surfactant, etc. are removed from said toner particles and a drying step in which the toner particles subjected to washing are dried.

An example of a method for preparing a dispersed resin particles in water is a method in which the resin of the present invention having a carboxyl group is dissolved in an organic solvent containing a solvent of a ketone type, a basic substance is added thereto, water is then added so that a phase transfer from an oily phase to an aqueous phase is conducted and, after that, the solvent of a ketone type is evaporated although the method for preparing a dispersed resin particles in water using the resin of the present invention is not limited to the above. Thus, it is also possible that a highly hydrophilic group such as sodium sulfonate is introduced into the resin skeleton followed by directly conducting a dispersing into water or that the resin of the present invention which is made hydrophilic in an organic solvent is added to water with stirring to disperse.

The amount of the organic solvent remained in the resin particles dispersed in water is preferred to be not more than 2%. More preferably, the amount is not more than 1%. When too much organic solvent is present, stability of the dispersion may be affected by that. For example, there may be a risk that composition of the media is changed due to evaporation of the organic solvent whereby the system becomes unstable and viscosity becomes very high or aggregation of particles happens and precipitates are generated. There is another risk that, when the polymerization toner is manufactured using a dispersed resin particles, the remaining organic solvent affects the properties of the toner. Amount of the organic solvent can be controlled by a conventional means such as that the heating temperature for the evaporation the solvent is made high, the heating time is made long or degree of vacuum is adjusted.

Average particle diameter of the water dispersion of the resin particles is preferred to be 30 nm to 500 nm. When the average particle diameter is less than 30 nm, there is a risk that the water dispersion becomes highly viscous, solid concentration becomes low and workability lowers. When it is more than 500 nm, dispersibility lowers such as that precipitates are generated during the storage. Upper limit of the average particle diameter is preferred to be 400 nm and more preferred to be 300 nm. Lower limit of the particle diameter is preferred to be 40 nm and more preferred to be 50 nm.

When a toner is prepared using the rosin-modified hyper-branched polymer of the present invention as a water dispersion, nonionic surfactant may be used. This is used for a purpose of stabilization of dispersing of each fine particle during the aggregating step and adjustment of aggregating force of the dispersed fine particles. Thus, since nonionic surfactant significantly lowers its stabilizing force for dispersion of particles at the temperature of not lower than its cloud point, an appropriate amount is made to coexist upon preparation of the fine particle dispersion with ionic surfactant or a predetermined amount is previously added to an associating system whereby it is possible to adjust the aggregating force among the particles based on the control of the aggregating temperature and uniformity whereby efficiency of aggregation of the particle can be achieved.

Examples of the above nonionic surfactant include polyethylene oxide, polypropylene oxide, a combination of polypropylene oxide with polyethylene oxide, an ester of polyethylene glycol with higher fatty acid, alkylphenol polyethylene oxide, an ester of higher fatty acid with polyethylene glycol, an ester of higher fatty acid with polypropylene oxide and sorbitan ester and, if necessary, ionic surfactant may be used together therewith.

Examples of the ionic surfactant include sulfonate (such as sodium dodecylbenzenesulfonate, sodium arylalkylpolyether sulfonate, sodium 3,3-disulfonediphenylurea-4,4-diazo- bis-amino-8-naphthol-6-sulfonate, o-carboxybenzene-azo-dimethylaniline or sodium 2,2,5,5-tetramethyl-triphenylmethane-4,4-diazo-bis-β-naphthol-6-sulfonate), sulfate ester salt (such as sodium dodecylsulfate, sodium tetradecylsulfate, sodium pentadecylsulfate or sodium octylsulfate) and fatty acid salt (such as sodium oleate, sodium laurate, sodium caprate, sodium caprylate, sodium caproate, potassium stearate or calcium oleate).

There will be no problem at all even if an appropriate dispersion stabilizer is added to a water dispersion. Examples thereof include polyvinyl alcohol, gelatin, acacia gum, methyl cellulose, ethyl cellulose, methyl hydroxypropyl cellulose, sodium salt of carboxymethyl cellulose, sodium dodecylbenzenesulfate, sodium dodecyl benzenesulfonate, sodium octylsulfate, sodium laurate, calcium phosphate, magnesium phosphate, aluminum phosphate, calcium carbonate, magnesium carbonate, barium sulfate and bentonite. The dispersion stabilizer as such may be used in an amount of 0.05 to 3% by mass.

A dispersion of fine particles of coloring agent can be prepared by dispersing the coloring agent in an aqueous medium. Dispersing treatment of the coloring agent is carried out under such a state that the surfactant concentration is made not lower than a critical micelle concentration (CMC) in water. As to the surfactant used therefor, anionic and nonionic surfactants may be used and each of them is used solely or they may be used by mixing in an appropriate composition. Although there is no particular limitation for a dispersing device used for the dispersing treatment of the coloring agent, preferred examples thereof include ultrasonic dispersing device, mechanical homogenizer, high-pressure dispersing device such as pressurizing homogenizer, sand grinder and a medium-type dispersing device such as a diamond fine mill. As to the surfactant used therefor, the same one which is mentioned above may be exemplified.

Dispersing treatment of the releasing agent may be carried out by the same method as that used for preparation of the dispersion of the coloring agent mentioned above.

As to a method for aggregation and fusion of each fine particle, an example thereof is a method where a salting-out agent comprising alkali metal salt or alkali earth metal salt is added to an aqueous medium containing fine particles of resin and fine particles of coloring agent as an aggregating agent in a concentration of not lower than the critical aggregating concentration and, after that, the medium is heated.

As to the salting-out agent used here, alkali metal salt and alkali earth metal salt are exemplified. Examples of the alkali metal are univalent metal such as lithium, potassium or sodium and examples of the alkali earth metal include divalent metal such as magnesium, calcium, strontium or barium. Salt of two or more valences such as aluminum may be used as well. Preferred examples include potassium, sodium, magnesium, calcium and barium and examples of that which constitutes a salt are chlorine, bromine, iodine, carbonic acid and sulfuric acid.

In the filtering/washing step, there are carried out a filtering treatment where the toner particles are filtered from a dispersion of toner particles prepared in the above step and a washing treatment where the co-existing surfactant, salting-out agent, etc. are removed from the filtered toner particles. As to the method for the filtering treatment, a centrifugal separation method, a vacuum filtration method using a Nutsche funnel and a filtration method using a filter press or the like may be exemplified although they are non-limitative.

The drying step is a step where the toner particles subjected to the washing treatment is subjected to a drying treatment. As to a drying device used in this step, a spray drier, a vacuum freezing drier and a vacuum drier may be exemplified and a standing shelf drier, a movable shelf drier, a fluidized bed drier, a rotary drier, a stirring drier, etc. are preferably used. Water content in the toner particles subjected to the drying treatment is preferred to be not more than 5% by mass and more preferred to be not more than 2% by mass. When the toner particles after the drying treatment are aggregated by means of a weak attractive force among them, said aggregated one may be subjected to a disintegrating treatment. As to a device for the disintegrating treatment, a disintegrating device of a mechanical type such as jet mill or Henschel mixer may be used.

As to an external additive which is used when the toner particles prepared by the above steps is subjected to an external addition treatment, known inorganic fine particles which have been used as a fluidity adjusting agent in the field of toner for electrostatic image development may be used and examples thereof include various carbides such as silicon carbide, boron carbide, titanium carbide, zirconium carbide, hafnium carbide, vanadium carbide, tantalum carbide, niobium carbide, tungsten carbide, chromium carbide, molybdenum carbide, calcium carbide or diamond carbon lactam; various nitrides such as boron nitride, titanium nitride or zirconium nitride; various borates such as zirconium borate; various oxides such as titanium oxide (titania), calcium oxide, magnesium oxide, zinc oxide, copper oxide, aluminum oxide, silica or colloidal silica; various titanic acid compounds such as calcium titanate, magnesium titanate and strontium titanate; sulfides such as molybdenum disulfide; various fluorides such as magnesium fluoride or carbon fluoride; various metal soaps such as aluminum stearate, calcium stearate, zinc stearate or magnesium stearate; and various nonmagnetic inorganic fine particles such as talc or bentonite. Each of them may be used solely or jointly. It is preferred that the inorganic fine particles (particularly, silica, titanium oxide, alumina, zinc oxide, etc.) are subjected to a surface treatment by a known method using conventionally used agent for making hydrophobic such as silane coupling agent, titanate coupling agent, silicone oil or silicone varnish or, further, using a silane coupling agent of a fluorine type, silicone oil of a fluorine type, a coupling agent having amino group or quaternary ammonium salt group or a treating agent such as a modified silicone oil.

Average primary particle diameter of the inorganic fine particles used as an external additive is 5 to 100 nm, preferably 10 to 50 nm, and more preferably, 20 to 40 nm.

As to organic fine particles, it is possible to use fine particles of styrene type, (meth)acrylic type, benzoguanamine, melamine, polyethylene fluoride, silicone, polyethylene or polypropylene granulated by a wet-type polymerization method such as an emulsion polymerization method, a soap-free emulsifying polymerization method or a non-water dispersion polymerization method or by a gas-phase method for the purpose of a cleaning aid, etc.

The toner which is prepared using the rosin-modified hyper-branched polymer of the present invention may be used as a mono-componential developer as it is or as a toner in a two-componential developer comprising a toner and a carrier. An example of a carrier which is usable in the two-componential developer is a resin-coated carrier having a coating layer comprising the resin such as polyethylene or polypropylene on the surface of a core material. It may also be a carrier into which the resin is dispersed where metal such as gold or copper and carbon black are dispersed in a matrix resin. Examples of the core material of the carrier include a magnetic metal such as iron or nickel, a magnetic oxide such as ferrite or magnetite and glass beads.

The toner which is prepared using the rosin-modified hyper-branched polymer of the present invention may be used as a full-color toner to be used in a full-color image forming device or may be used as a monochromatic toner to be used in a monochromatic image forming device.

Although the toner which is prepared using the rosin-modified hyper-branched polymer of the present invention may be used in an image forming device having any type of fixing equipment, it is preferred to be used for an image forming device having a fixing equipment of a type where the amount of oil for releasing applied on a fixing member such as roller is reduced or, in other words, for an image forming device having a fixing equipment where the applied amount of the oil for releasing is not more than 4 mg/m² or, particularly, for an image forming device having a fixing equipment of a type to which no oil for releasing is applied.

Besides the above-mentioned use as a toner, the rosin-modified hyper-branched polymer of the present invention can also be used as a binder such as a charge-controlling agent, a magnetic recording medium, a medium for dispersing the fine particles or a coating agent and also as a high-molecular surfactant such as a surface improving agent, a dispersing agent for pigment or a protective colloid for emulsion polymerization.

The rosin-modified hyper-branched polymer of the present invention is a very useful thing where resin strength is excellent, anti-blocking property is good and dependency on environment is little while the conventional characteristics of the hyper-branched polymer where flowing of the resin easily takes place when exceeding the glass transition temperature is still available. Particularly, when the rosin-modified hyper-branched polymer of the present invention is used for a toner, it is now possible to provide a toner being unavailable up to now which exhibits excellent anti-blocking property, resin strength and charge stability at high temperature and high humidity, has advantages of both hyper-branched polymer and rosin and exhibits excellent low-temperature fixing property, pigment dispersibility and grinding property.

The rosin-modified hyper-branched polymer of the present invention can be made into a pigment master batch utilizing its excellent dispersibility for the pigment. The pigment master batch of the present invention can be used for use as a toner for example. Particularly in the case of color toner, its color-developing property is considered to be important. Although the color-developing property is dependent upon the type of the color pigment, it is greatly affected by the dispersed state of the pigment in the toner. Thus, when the pigment is well dispersed, the resulting image of the toner exhibits a good color development resulting in a bright color tone while, in the case of toner where dispersing of the pigment is poor, color development of the image is bad resulting in a bit dark color tone. In addition, since the color pigment itself has a friction charging property, charging property of each toner becomes uneven if dispersing of the pigment in the toner is bad whereby poor image such as fog on the ground is apt to happen. Since the pigment master batch of the present invention contains the hyper-branched polymer having very good pigment dispersibility, it is now possible to prepare a toner where dispersing of the pigment is very good and charging property is uniform when the pigment master batch of the present invention is used.

Since the toner which is prepared using the pigment master batch of the present invention contains the hyper-branched polymer where flowing of the resin easily takes place at the temperature of higher than the glass transition temperature, it also contributes in an improvement in fixing property of the toner at low temperature.

In the pigment master batch of the present invention, hyper-branched polymer and pigment are essential components and may be further compounded with other inorganic particles, organic particles, wax and solvent if necessary. Although the pigment concentration in that case varies depending upon the type of the pigment, it is usually 10 to 60% by mass in the pigment master batch.

In the pigment master batch of the present invention, known ones are used as the organic pigment and examples thereof include Aniline Blue, Calco Oil Blue, Phthalocyanine Blue, ultramarine blue, Prussian blue, Cobalt Blue, Phthalocyanine Blue, Fast Sky Blue, Alkali Blue Lake, Victoria Blue Lake, quinacridone, Chromium Yellow, Quinoline Yellow, Methylene Blue chloride, Malachite Green oxalate, Rose Bengal, Dupont Oil Red, Permanent Red 4R, Lake Red, Watching Red calcium salt, Brilliant Carmine 3B, Fast Violet B, Methyl Violet Lake, Alkali Blue Lake, Victoria Blue Lake, quinacridone, Rhodamine B, Rhodamine Lake, Pigment Green B, Malachite Green Lake and Final Yellow Green G. The organic pigment as such may be used either solely or jointly.

Examples of the organic particles in the pigment master batch of the present invention include polymer particles of polymethyl methacrylate resin, polystyrene resin, Nylon resin, melamine resin, benzoguanamine resin, phenol resin, urea resin, silicone resin, methacrylate resin, acrylate resin and terpene resin or cellulose powder, nitrocellulose powder, wood powder, used paper powder, chaff powder and starch. The polymer particles may also be prepared by dispersing the organic particles prepared by a polymerization method such as emulsion polymerization, suspension polymerization, dispersion polymerization, soap free polymerization or microsuspension polymerization. Shape of the particles may be any of powder, particles, granules, plates, needles, etc. and there is no particular limitation therefor. The organic particles as such may be used either solely or jointly.

Examples of the inorganic pigment used in the pigment master batch of the present invention include inorganic type particles containing oxide, hydroxide, sulfate, carbonate, silicate, etc. of the metal such as magnesium, calcium, barium, zinc, iron, zirconium, molybdenum, silicon, antimony or titanium as well as carbon black. The inorganic pigment as such may be used either solely or jointly.

Specific examples of the wax in the pigment master batch of the present invention include wax of a hydrocarbon type such as liquid paraffin, natural paraffin, microwax, synthetic paraffin or polyethylene wax; wax of a fatty acid type such as stearic acid; wax of a fatty acid amide type such as stearic amide, palmitic amide, methylenebisstearoamide, ethylenebissteartoamide, oleic amide or esilate amide; wax of an ester type such as lower alcohol ester of fatty acid; polyhydroxy alcohol ester of fatty acid or fatty acid polyglycol ester; wax of an alcohol type such as cetyl alcohol or stearyl alcohol; natural substance wax such as olefin-type wax, castor wax or carnauba wax; and metal soap derived from fatty acid having 12 to 30 carbons. The wax as such may be used either solely or jointly.

Examples of the organic solvent in the pigment master batch of the present invention include an aromatic hydrocarbon solvent such as toluene, xylene or Solvesso; an ester-type solvent such as ethyl acetate, propyl acetate, isopropyl acetate, butyl acetate or isobutyl acetate; a ketone-type solvent such as acetone, methyl ethyl ketone or cyclohexanone; an alcohol-type solvent such as methanol, ethanol, n-propanol, isopropanol, n-butanol or isobutanol; a glycol ether-type solvent such as ethylene glycol monomethyl ether, ethylene glycol monoethyl ether, ethylene glycol monobutyl ether or propylene glycol monomethyl ether; a glycol ether ester-type solvent where the above one is made into an acetyl ester; and a lactate-type solvent such as ethyl lactate and methyl lactate. Each of the above solvent may be used solely or two or more thereof may be used jointly.

If necessary, various additives such as antioxidant, heat stabilizer, ultraviolet absorber, lubricant, adhesion-endowing agent, plasticizer, cross-linking agent, viscosity adjusting agent, antistatic agent, perfume, antibacterial agent, dispersing agent or polymerization inhibitor may be further added, if necessary, to the pigment master batch of the present invention within such an extent that the advantages of the present invention are not deteriorated.

As to a method for the manufacture of the pigment master batch of the present invention, it is possible that the hyper-branched polymer, the inorganic or organic pigment, etc. are mixed and dispersed, after setting the temperature condition, etc. depending upon the characteristic of the resin, using a conventional dispersing machine such as paint shaker, pressurizing kneader, Bumbury mixer, two-roll kneader, three-roll kneader, roll mill disperser, sand grind mill disperser, planetary mixer, high-speed disperser, uniaxial kneader or biaxial kneader.

As to a method for preparing the toner using the pigment master batch of the present invention, there may be exemplified the so-called grinding method where the master batch is mixed with main resin and various additives and subjected to fusion kneading, grinding and classifying to make into toner. On the other hand, since the pigment master batch of the present invention can efficiently disperse the pigment in very high concentrations, it can also be expected for coloration of polyester resin of a solvent dissolving type or a water dispersing type. Therefore, the toner may be prepared by the so-called polymerization method. Examples of the polymerization method include a method where a monomer of a vinyl type is mixed with an initiator, a coloring agent, etc. and the particles are grown by the so-called radical polymerization method and a method where "resin in fine particles" dispersed in water and "resin solution" in which resin is dissolved in an organic solvent are used as starting materials and subjected to aggregation, mixing, etc. with a pigment master bath, wax dispersion, etc. and the resulting particles are subjected, if necessary, to removal of the solvent therefrom and then heated so that the particles are fused and combined. In preparing the toner using the pigment master batch of the present invention, any of a grinding method and a polymerization method may be used.

When the toner is prepared using the pigment maser batch of the hyper-branched polymer type of the present invention, it is now possible to prepare the toner in which dispersing of the pigment is very good and charging property is uniform. Further since a hyper-branched polymer having little interaction between molecules is used as a dispersed resin, it also contributes in stability of the toner at low temperature.

### Examples

The present invention will now be further specifically illustrated by using the following Examples and Comparative Examples although the present invention is not limited thereto. In the Examples, properties of the resin, the dispersion of the resin particles, the dispersion of the pigment, and the dispersion of the wax are measured as follows. In the Examples and Comparative Examples, the term described as simply "parts" refers to the parts by mass.

(1) Number-average molecular weight and weight-average molecular weight: A GPC measurement was done by using gel permeation chromatography (GPC) 150c manufactured by Waters where tetrahydrofuran was used as an eluate, the column temperature was 30°C and the flow rate was 1 ml/minute. Calculation was conducted from the result whereupon the measured value based on polystyrene was obtained. As to the column, Shodex KF-802, 804 and 806 manufactured by Showa Denko K. K. was used.

(2) Hydroxyl value: A sample was esterified using a solution of acetic anhydride in pyridine and an excessive acetic anhydride was titrated with a potassium hydroxide solution using phenolphthalein as an indicator.

(3) Acid value: A sample (0.2 g) was precisely weighed and dissolved in 20 ml of chloroform. After that, acid value was determined using 0.01N potassium hydroxide (a solution in ethanol). Phenolphthalein was used as an indicator.

(4) Glass transition temperature: A sample (5 mg) was placed in a sample pan made of aluminum, tightly sealed and measured using a differential scanning calorimetric analyzer (DSC) DSC-220 manufactured by Seiko Instruments K. K. at a rising rate of 20°C/minute up to 200°C and glass transition temperature was determined as the temperature of the crossing point of an extended line of the base line below the glass transition temperature and a tangent line showing the maximum inclination at the transition area.

(5) Particle diameter and particle size distribution: A dispersion was prepared so as to make the solid concentration 0.1% by mass using only distilled water and the measurement was conducted at 25°C using a Coulter counter LS13 320.

(6) Method for measuring the residual solvent (content of residual organic solvent in water dispersion) : In gas chromatography HP 5890 (manufactured by HEWLETT PACKARD) under the condition where filled capillary was PORAPLOT-Q (ϕ0.32 mm X 10 m), injection temperature was 220°C and detecting temperature was 220°C, 1,4-dioxane was used as an internal standard substance and a water dispersion diluted with ion-exchange water was directly poured into the device and the content of the organic solvent was determined.

(7) Concentration of metal sulfonate: Determination was conducted from concentration of Na which is a metal component. A sample for Na concentration (0.1 g) was carbonized and dissolved in an acid and Na concentration was determined by means of atomic absorption spectrometry and the resulting value was converted as the content of metal sulfonate. The unit was expressed as eq/ton.

Hereinafter, the specific embodiments will be illustrated when the hyper-branched polymer of the present invention was used mostly as a toner for electrophotography.

### Manufacturing Example of Resin (1)

Synthesis of hyper-branched polymer A1 Pentaerythritol (136 parts), 1776 parts of dimethylolbutanoic acid and 21 parts of p-toluenesulfonic acid (hereinafter, abbreviated as PTS) were placed into a reactor equipped with partial condenser, thermometer and stirring rod and stirred at 100°C to give a uniform liquid fused product mixture. Then 100 parts of toluene was poured thereinto, the mixture was raised up to 140°C, toluene was refluxed and water generated thereby was evaporated outside the system by means of azeotropy. After the reaction was continued for five hours under the same condition, toluene was evaporated outside the system to give hyper-branched polymer A1 (which was to be a core). Number-average molecular weight, weight-average molecular weight, hydroxyl value, acid value and glass transition temperature of the resulting polycondensate were 1500, 2100, 502.0 mg KOH/g, 0.6 mg KOH/g and 32°C, respectively.

To this hyper-branched polymer (A1) (1000 parts) were added 1450 parts of Pine Crystal KR-85 (rosin in superlight color manufactured by Arakawa Kagaku Kogyo) and 30 parts of PTS and the mixture was made to react at 230°C for 24 hours in a nitrogen atmosphere together with evaporation of water to give a rosin-modified hyper-branched polymer B1. Number-average molecular weight, weight-average molecular weight, Mw/Mn, hydroxyl value, acid value and glass transition temperature of the resulting rosin-modified hyper-branched polymer B1 were 2200, 18200, 8.3, 48.0 mg KOH/g, 1.8 mg KOH/g and 58°C, respectively.

### Manufacturing Example of Resin (2)

To the hyper-branched polymer (A1) (1000 parts) were added 2150 parts of Gum Rosin X (gum rosin manufactured by Dainippon Ink and Chemicals Inc.) and 30 parts of PTS and the mixture was made to react at 230°C for 24 hours in a nitrogen atmosphere to give a rosin-modified hyper-branched polymer B2. Number-average molecular weight, weight-average molecular weight, hydroxyl value, acid value and glass transition temperature of the resulting rosin-modified hyper-branched polymer B2 were 2800, 10100, 25.0 mg KOH/g, 1.4 mg KOH/g and 65°C, respectively.

### Manufacturing Example of Resin (3)

To the hyper-branched polymer (A1) (1000 parts) were added 2102 parts of Pine Crystal KR-85 and 30 parts of PTS and the mixture was made to react at 230°C for 24 hours in a nitrogen atmosphere. After that, the mixture was cooled down to 220°C in a nitrogen stream, 90 parts of trimellitic anhydride was poured hereinto and the mixture was made to react for 30 minutes to give rosin-modified hyper-branched polymer B3.
Number-average molecular weight, weight-average molecular weight, hydroxyl value, acid value and glass transition temperature of the resulting rosin-modified hyper-branched polymer B3 were 3100, 14300, 21.0 mg KOH/g, 11.2 mg KOH/g and 64°C, respectively.

### Manufacturing Example of Resin (4)

Synthesis of hyper-branched polymer A2 Pentaerythritol (136 parts), 4144 parts of dimethylolbutanoic acid and 21 parts of PTS were placed into a reactor equipped with partial condenser, thermometer and stirring rod and stirred at 100°C to give a uniform liquid fused product mixture. Then 100 parts of toluene was poured thereinto, the mixture was raised up to 140°C, toluene was refluxed and water generated thereby was evaporated outside the system by means of azeotropy. After the reaction was continued for five hours under the same condition, toluene was evaporated outside the system to give hyper-branched polymer A2 (which was to be a core). Number-average molecular weight, weight-average molecular weight, hydroxyl value, acid value and glass transition temperature of the resulting polycondensate were 2300, 3500, 494.0 mg KOH/g, 0.7 mg KOH/g and 40°C, respectively.

To this hyper-branched polymer (A2) (1000 parts) were added 1390 parts of Siragiku Rosin (manufactured by Arakawa Kagaku Kogyo) and 30 parts of p-toluenesulfonic acid and the mixture was made to react at 230°C for 24 hours in a nitrogen atmosphere together with evaporation of water to give a rosin-modified hyper-branched polymer B4. Number-average molecular weight, weight-average molecular weight, hydroxyl value, acid value and glass transition temperature of the resulting rosin-modified hyper-branched polymer B4 were 4200, 59000, 25.0 mg KOH/g, 2.1 mg KOH/g and 66°C, respectively.

### Manufacturing Example of Resin (5)

Synthesis of hyper-branched polymer A3 Pentaerythritol (136 parts), 8880 parts of dimethylolbutanoic acid and 21 parts of PTS were placed into a reactor equipped with partial condenser, thermometer and stirring rod and stirred at 100°C to give a uniform liquid fused product mixture. Then 100 parts of toluene was poured thereinto, the mixture was raised up to 140°C, toluene was refluxed and water generated thereby was evaporated outside the system by means of azeotropy. After the reaction was continued for five hours under the same condition, toluene was evaporated outside the system to give hyper-branched polymer A3 (which was to be a core). Number-average molecular weight, weight-average molecular weight, hydroxyl value, acid value and glass transition temperature of the resulting polycondensate were 2800, 5100, 484.0 mg KOH/g, 0.7 mg KOH/g and 43°C, respectively.

To the hyper-branched polymer (A3) (1000 parts) were added 2300 parts of abietic acid and 30 parts of p-toluenesulfonic acid and the mixture was made to react at 230°C for 24 hours in a nitrogen atmosphere to give a rosin-modified hyper-branched polymer B5. Number-average molecular weight, weight-average molecular weight, hydroxyl value, acid value and glass transition temperature of the resulting rosin-modified hyper-branched polymer B5 were 2500, 8600, 15.2 mg KOH/g, 1.1 mg KOH/g and 78°C, respectively.

### Manufacturing Example of Resin (6)

Terephthalic acid (318 parts), 318 parts of isophthalic acid, 7.7 parts of trimellitic anhydride, 447 parts of ethylene glycol and 70 parts of 2-methyl-1,3-propanediol were placed into a reactor equipped with stirrer, condenser and thermometer and subjected to esterification reaction from 160°C to 230°C for 3 hours in a nitrogen atmosphere. After releasing the pressure, 0.42 part of tetrabutyl titanate was charged, the pressure in the system was gradually vacuumized down to 5 mmHg within 20 minutes and polycondensation reaction was carried out at 260°C for 40 minutes *in vacuo* (0.3 mmHg or lower). The mixture was cooled down to 220°C in a nitrogen stream, 4 parts of trimellitic anhydride was poured hereinto and the mixture was made to react for 30 minutes. Number-average molecular weight, weight-average molecular weight, hydroxyl value, acid value and glass transition temperature of the resulting polyester resin B6 were 9000, 21000, 10.5 mg KOH/g, 18.0 mg KOH/g and 55°C, respectively.

### Manufacturing Example of Resin (7)

Terephthalic acid (318 parts), 318 parts of isophthalic acid, 7.7 parts of trimellitic anhydride, 322 parts of ethylene glycol and 1152 parts of an adduct of bisphenol A with ethylene oxide (BPE-20F; manufactured by Sanyo Kasei Co., Ltd.) were placed into a reactor equipped with stirrer, condenser and thermometer and subjected to esterification reaction from 160°C to 230°C for 3 hours in a nitrogen atmosphere. After releasing the pressure, 0.42 part of tetrabutyl titanate was charged, the pressure in the system was gradually vacuumized down to 5 mmHg within 20 minutes and polycondensation reaction was carried out at 260°C for 40 minutes *in vacuo* (0.3 mmHg or lower). The mixture was cooled down to 220°C in a nitrogen stream, 23 parts of trimellitic anhydride was poured hereinto and the mixture was made to react for 30 minutes. Number-average molecular weight, weight-average molecular weight, hydroxyl value, acid value and glass transition temperature of the resulting polyester resin B7 were 3700, 12000, 22.5 mg KOH/g, 18.0 mg KOH/g and 58°C, respectively.

### Manufacturing Example of Resin (8)

Gum Rosin X (gum rosin manufactured by Dainippon Ink and Chemicals Inc.) (1346 parts) and 3456 parts of Epiclon 1050 (epoxy resin of a bisphenol A type manufactured by Dainippon Ink and Chemicals Inc.) were charged into a reactor equipped with stirrer, condenser and thermometer, temperature was raised up to 130°C during 1 hour and, after confirming that the reaction system was uniformly stirred, 3.3 g of triphenyl phosphine was poured thereinto and the temperature was raised up to 190°C during 1 hour. At this temperature, a ring opening reaction of acid group of the rosin with epoxy group of the epoxy resin was carried out for continued 4 hours. Number-average molecular weight, weight-average molecular weight, hydroxyl value, acid value and glass transition temperature of the resulting resin B8 were 1000, 1500, 90.0 mg KOH/g, 2.3 mg KOH/g and 64°C, respectively.

### Manufacturing Example of Resin (9)

Resin A1 (1000 parts) and 328 parts of nonanoic acid were placed into a reactor equipped with stirrer, condenser and thermometer and the mixture was made to react at 230°C for 12 hours in a nitrogen atmosphere together with evaporation of water to give a rosin-modified hyper-branched polymer B9. Number-average molecular weight, weight-average molecular weight, hydroxyl value, acid value and glass transition temperature of the resulting rosin-modified hyper-branched polymer B9 were 2300, 12000, 258.2 mg KOH/g, 2.2 mg KOH/g and 22°C, respectively.

### Manufacturing Example of Resin (10)

Synthesis of hyper-branched polymer A4 Trimethylolpropane (272 parts), 1184 parts of dimethylolbutanoic acid and 42 parts of PTS were placed into a reactor equipped with partial condenser, thermometer and stirring rod and stirred at 100°C to give a uniform liquid fused product mixture. Then 100 parts of toluene was poured thereinto, the mixture was raised up to 140°C, toluene was refluxed and water generated thereby was evaporated outside the system by means of azeotropy. After the reaction was continued for five hours under the same condition, toluene was evaporated outside the system to give hyper-branched polymer A4 (which was to be a core). Hydroxyl value, acid value, number-average molecular weight, weight-average molecular weight, Mw/Mn and glass transition temperature of the resulting polycondensate were 896.0 mg KOH/g, 0.4 mg KOH/g, 500, 700, 1.4 and 21°C, respectively.

To this hyper-branched polymer (A4) (1000 parts) were added 480 parts of isononanoic acid and the mixture was made to react at 230°C for 12 hours in a nitrogen atmosphere to give a rosin-modified hyper-branched polymer B10. Number-average molecular weight, weight-average molecular weight, hydroxyl value, acid value and glass transition temperature of the resulting rosin-modified hyper-branched polymer B10 were 750, 3000, 460.0 mg KOH/g, 2.2 mg KOH/g and 16°C, respectively.

### [Manufacturing Example of Resin Particle Dispersion 1]

Rosin-modified hyper-branched polymer B3 (1000 parts) was poured into a reactor equipped with stirrer, condenser and thermometer, 1060 parts of methyl ethyl ketone and 160 parts of isopropyl alcohol were added thereto and the polyester was dissolved thereinto at 70°C. After that, the solution was cooled and, when the inner temperature reached 55°C, 11 parts of 28% aqueous ammonia was added and then 3310 parts of ion-exchange water of 55°C was added thereto at the rate of 220 parts per minute during 15 minutes as a result to give a water dispersion containing the residual solvent. After that, the reactor was gradually heated and, when about 220 parts of the solvent and water were evaporated, cooling was conducted and the content was taken out when the temperature became 35°C. Finally, filtration was carried out using a Nylon mesh of 200 meshes to give a water dispersion E1 of rosin-modified hyper-branched polymer B3. In the water dispersion E1, non-volatile matter was 30.0%, amount of the residual organic solvent was 0.002% and volume-average particle diameter measured by a Coulter counter was 160 nm.

### [Manufacturing Example of Resin Particle Dispersion 2]

Polyester resin B6 (1000 parts) was poured into a reactor equipped with stirrer, condenser and thermometer, 2220 parts of methyl ethyl ketone and 110 parts of isopropyl alcohol were added thereto and the polyester was dissolved thereinto at 70°C. After that, the solution was cooled and, when the inner temperature reached 55°C, 29 parts of 28% aqueous ammonia was added and then 4200 parts of ion-exchange water of 55°C was added thereto at the rate of 280 parts per minute during 15 minutes as a result to give a water dispersion containing the residual solvent. After that, the reactor was gradually heated and, when about 4200 parts of the solvent and water were evaporated, cooling was conducted and the content was taken out when the temperature became 35°C. Finally, filtration was carried out using a Nylon mesh of 200 meshes to give a water dispersion E2 of polyester resin B6. In the water dispersion E2, non-volatile matter was 30.2%, amount of the residual organic solvent was 0.05% and volume-average particle diameter measured by a Coulter counter was 20 nm.

### [Preparation of a Wax Dispersion]

Distilled water (1500 parts), 400 parts of paraffin wax (HNP0190; manufactured by Nippon Seiro) and 38 parts of sodium dodecylbenzenesulfonate were mixed and emulsified/dispersed by applying high-pressure shearing to give a dispersion of fine particles of wax. Particle diameter of the fine particles of wax was measured by a Coulter counter (a measuring device for dynamic light scattering particle size distribution) whereupon volume-average particle diameter was 160 nm.

### [A Dispersion of Fine Particles of Coloring Agent]

Sodium dodecylbenzenesulfonate (95 parts) was dissolved in 2840 parts of distilled water, 400 parts of cyan pigment (copper phthalocyanine B15:3, manufactured by Dainichi Seika) as fine particles of coloring agent was added thereto and dispersed therein to give a dispersion of fine particles of coloring agent (1). Particle diameter of the dispersed carbon black was measured by a Coulter counter (a measuring device for dynamic light scattering particle size distribution) whereupon volume-average particle diameter was 104 nm.

### [Example 1]

Rosin-modified hyper-branched polymer B1 (100 parts), 7 parts of carbon black MA-100 (manufactured by Mitsubishi Chemical), 0.5 part of colloidal silica (Aerosil R 972 manufactured by Nippon Aerosil), 2 parts of dipentaerythritol hexamyristate as a releasing agent and 1 part of charge adjusting agent T-77 (manufactured by Hodogaya Chemical) were kneaded in a biaxial kneader (PCM-30 manufactured by K. K. Ikegai) at 200°C. After that, the mixture was finely ground using a supersonic jet grinder (Labojet; manufactured by Nippon Newmatic Kogyo) followed by classifying to give toner particles T1 where volume-average particle diameter was 7.2 µm.

### [Examples 2 to 5]

The same operation as in Example 1 was carried out except that rosin-modified hyper-branched polymers B2 to B5 were used instead of the rosin-modified hyper-branched polymer B1 to give the toner particles T2 to T5, respectively.

### [Example 6]

Rosin-modified hyper-branched polymer B1 (50 parts), 50 parts of polyester resin B6, 7 parts of carbon black MA-100 (manufactured by Mitsubishi Chemical), 0.5 part of colloidal silica (Aerosil R 972 manufactured by Nippon Aerosil), 2 parts of dipentaerythritol hexamyristate as a releasing agent and 1 part of charge adjusting agent T-77 (manufactured by Hodogaya Chemical) were kneaded in a biaxial kneader (PCM-30 manufactured by K. K. Ikegai) at 200°C. After that, the mixture was finely ground using a supersonic jet grinder (Labojet; manufactured by Nippon Newmatic Kogyo) followed by classifying to give toner particles T6 where volume-average particle diameter was 7.2 µm.

### [Example 7]

Resin particle dispersion E1 (420.7 g; calculated as the solid), 166 g of coloring agent dispersion and 95 g of wax dispersion were placed in a reactor (four-necked flask) equipped with stirrer, condenser, nitrogen-introducing device and temperature sensor followed by stirring. After adjusting the inner temperature to 30°C, 2M aqueous solution of sodium hydroxide was added to this solution whereupon the pH was adjusted to 11.0. After that, an aqueous solution where 12.1 g of magnesium chloride hexahydrate was dissolved in 1000 ml of ion-exchange water was added thereto with stirring at 30°C during 10 minutes. After the mixture was allowed to stand for 3 minutes, temperature was started to raise and this system was heated up to 90°C during 6 minutes (rising rate: 10°C/minute). Particle diameter of the associated particles was measured at that state and, when the volume-average particle diameter became 4.1 µm, an aqueous solution where 80.4 g of sodium chloride was dissolved in 1000 ml of ion-exchange water was added so as to stop the growth of the particles and the mixture was aged by heating with stirring for 2 hours where the liquid temperature was 85°C to proceed the process for making into spheres. After that, the system was cooled down to 40°C at the rate of 8°C/minute, pH was adjusted to 2.0 by addition of hydrochloric acid thereto and the stirring was stopped. The resulting associated particles were filtered, repeatedly washed with ion-exchange water where the temperature was adjusted to 45°C and, after that, dried with hot air of 40°C to give toner particles T7 where volume-average particle diameter was 6. 6 µm. To 100 parts by mass of the resulting toner particles T7 were added 0.5 part by mass of hydrophobic silica (H-2000; manufactured by Clariant), 1. 0 part by mass of titanium oxide (STT30A; manufactured by Titan Kogyo, Ltd.) and 1.0 parts by mass of strontium titanate (average particle diameter: 0.2 µm) and the mixture was subjected to a mixing treatment using a Henschel mixer (circumferential speed: 40 m/sec; for 60 seconds) followed by sieving with a sieve of 90 µm opening to give a toner.

### [Comparative Example 1]

Hyper-branched polymer A1 (100 parts), 7 parts of carbon black MA-100 (manufactured by Mitsubishi Chemical), 0.5 part of colloidal silica (Aerosil R 972 manufactured by Nippon Aerosil), 2 parts of dipentaerythritol hexamyristate as a releasing agent and 1 part of charge adjusting agent T-77 (manufactured by Hodogaya Chemical) were kneaded in a biaxial kneader (PCM-30 manufactured by K. K. Ikegai) at 200°C. After that, the mixture was finely ground using a supersonic jet grinder (Labojet; manufactured by Nippon Newmatic Kogyo) followed by classifying to give toner particles T8 where volume-average particle diameter was 8.6 µm.

### [Comparative Examples 2 to 4]

The same operation as in Comparative Example 1 was carried out except that polyester resin or resin B6 to B8 were used instead of the hyper-branched polymer A1 to give the toner particles T9 to T11.

### [Comparative Example 5]

Resin particle dispersion E2 (420.7 g; calculated as the solid), 166 g of coloring agent dispersion and 95 g of wax dispersion were placed in a reactor (four-necked flask) equipped with stirrer, condenser, nitrogen-introducing device and temperature sensor followed by stirring. After adjusting the inner temperature to 30°C, 2M aqueous solution of sodium hydroxide was added to this solution whereupon the pH was adjusted to 11.0. After that, an aqueous solution where 12.1 g of magnesium chloride hexahydrate was dissolved in 1000 ml of ion-exchange water was added thereto with stirring at 30°C during 10 minutes. After the mixture was allowed to stand for 3 minutes, temperature was started to raise and this system was heated up to 90°C during 6 minutes (rising rate: 10°C/minute). Particle diameter of the associated particles was measured at that state and, when the volume-average particle diameter became 4.1 µm, an aqueous solution where 80.4 g of sodium chloride was dissolved in 1000 ml of ion-exchange water was added so as to stop the growth of the particles and the mixture was aged by heating with stirring for 2 hours where the liquid temperature was 85°C to proceed the process for making into spheres. After that, the system was cooled down to 40°C at the rate of 8°C/minute, pH was adjusted to 2.0 by addition of hydrochloric acid thereto and the stirring was stopped. The resulting associated particles were filtered, repeatedly washed with ion-exchange water where the temperature was adjusted to 45°C and, after that, dried with hot air of 40°C to give toner particles T12 where volume-average particle diameter was 7.4 µm. To 100 parts by mass of the resulting toner particles T12 were added 0.5 part by mass of hydrophobic silica (H-2000; manufactured by Clariant), 1.0 part by mass of titanium oxide (STT30A; manufactured by Titan Kogyo, Ltd.) and 1.0 parts by mass of strontium titanate (average particle diameter: 0.2 µm) and the mixture was subjected to a mixing treatment using a Henschel mixer (circumferential speed: 40 m/sec; for 60 seconds) followed by sieving with a sieve of 90 µm opening to give a toner.

### (Preparation of a Binder-Type Carrier)

In order to subject the toner prepared in the above Examples and Comparative Examples to evaluations as a two-componential developer, a binder-type carrier was prepared.
Thus, 100 parts by mass of polyester-type resin, 700 parts by mass of magnetic particles (Magnetite; EPT-1000: manufactured by Toda Kogyo) and 2 parts by mass of carbon black (Morgal L; manufactured by Cabot) were well mixed using a Henschel mixer and subjected to fusion kneading using a biaxial extrusion kneader where temperature of the cylinder and the cylinder head was set at 180°C and 170°C, respectively. The kneaded product was cooled, then roughly ground using a hammer mill, finely ground using a jet grinder and classified to give a binder-type carrier where volume-average particle diameter was 40 µm.

In the Examples, properties of the toner were measured as follows.

Volume-average particle diameter Volume-average particle diameter was measured using a Coulter counter LS13 320 (manufactured by BECKMAN).

### (Method for evaluation of toner characteristic)

### Best Mode for Carrying Out the Invention

Toner (10 g) was allowed to stand for 24 hours under the high temperature of 50°C and checked by naked eye to evaluate.
○: No aggregate was noted at all.
Δ: Less than 10 aggregates were noted.
: 10 or more aggregates were noted.

In the following evaluations, a developer where toner and carrier were mixed so as to make the toner concentration 6% by mass was used.

Stability of the charge amount in environment Charged amount of the developer stored for 24 hours under the environment of low temperature and low humidity (10°C, 15%) and charged amount of the developer stored for 24 hours under the environment of high temperature and high humidity (30°C, 85%) were measured by a blow-off method and the difference in the measured values was used for evaluating the stability of the charge amount in environment.
○: Absolute value of the difference was not more than 7 µC/g.
: Absolute value of the difference was more than 7 µC/g.

Fixing property Fixing property was evaluated from anti-peeling property and from anti-offsetting property as a whole.
○: Result of all items was "○○" or "○".
Δ: "Δ" existed in addition to "○○" or "○".
×: At least one "×" existed.

Anti-peeling property Fixing temperature was changed within a range of 80 to 130°C at 2°C-intervals and a sold image of 1. 5 cm × 1. 5 cm (adhered amount: 2.0 mg/cm²) was taken using a digital copier (DIALTA Di350; manufactured by Minolta) equipped with an oilless fixing device, each image was folded into two at its center and the anti-peeling property of the image was evaluated by naked eye. The temperature between the fixing temperature where the image was somewhat peeled off and the fixing temperature where the image was not peeled off at all was defined as the lower limit temperature of fixing.
○○: Lower limit temperature of fixing was lower than 102°C.
○: Lower limit temperature of fixing was not lower than 102°C and was lower than 106°C.
Δ: Lower limit temperature of fixing was not lower than 106°C and was lower than 112°C.
×: Lower limit temperature of fixing was not lower than 112°C.

Anti-offset property Fixing system speed of a digital copier (DIALTA Di350; manufactured by Minolta) was made 1/2 and fixing temperature was changed within a range of 90°C to 150°C with 5°C-intervals to take an image in half tone, the offset state was observed by naked eye and the temperature where a high-temperature offset was generated (offset temperature) was evaluated.
○○: offset temperature was not lower than 128°C.
○: offset temperature was not lower than 120°C and was lower than 128°C. Δ: offset temperature was not lower than 115°C and was lower than 120°C.
×: offset temperature was lower than 115°C.

Anti-stress property Anti-stress property was evaluated by checking whether the phenomenon where the crushed or abraded toner particles by a continuous use of toner were adhered on the surface of an organic photoconductor in a thin layer happened or not.

Properties of the toners of the above Examples 1 to 7 and Comparative Examples 1 to 5 are shown in Table 1.
It is understood from Table 1 that the toner prepared using the rosin-modified hyper-branched polymer of the present invention achieved excellent stability of the charge amount in environment and fixing property at low temperature while its good heat-resistant storability and mechanical strength are still maintained.

**[Table 1]**

| | Toner particles | Volume-average particle diameter (µm) | Result of evaluation | | | |
|---|---|---|---|---|---|---|
| | | | Resistance to heat | Stability of the charge amount in environment | Fixing property | Anti-stress property |
| Example 1 | T1 | 7.2 | ○ | ○ | ○ | ○ |
| Example 2 | T2 | 8.2 | ○ | ○ | ○ | ○ |
| Example 3 | T3 | 8.5 | ○ | ○ | ○ | ○ |
| Example 4 | T4 | 7.1 | ○ | ○ | ○ | ○ |
| Example 5 | T5 | 8.2 | ○ | ○ | ○ | ○ |
| Example 6 | T6 | 7.2 | ○ | ○ | ○ | ○ |
| Example 7 | T7 | 6.6 | ○ | ○ | ○ | ○ |
| Comparative Example 1 | T8 | 8.6 | × | × | × | × |
| Comparative Example 2 | T9 | 12.3 | ○ | △ | × | △ |
| Comparative Example 3 | T10 | 8.5 | ○ | △ | △ | △ |
| Comparative Example 4 | T11 | 7.9 | × | × | × | × |
| Comparative Example 5 | T12 | 7.4 | △ | × | × | △ |

Hereinafter, specific embodiments concerning the pigment master bath and the toner using the same will be illustrated.

### Manufacturing Example of Resin (11)

### Synthesis of hyper-branched polymer P1

Pentaerythritol (136 parts), 1776 parts of dimethylolbutanoic acid and 21 parts of p-toluenesulfonic acid (hereinafter, abbreviated as PTS) were placed into a reactor equipped with partial condenser, thermometer and stirring rod and stirred at 100°C to give a uniform liquid fused product mixture. Then 100 parts of toluene was poured thereinto, the mixture was raised up to 140°C, toluene was refluxed and water generated thereby was evaporated outside the system by means of azeotropy. After the reaction was continued for five hours under the same condition, toluene was evaporated outside the system to give hyper-branched polymer P1 (which was to be a core). Number-average molecular weight, weight-average molecular weight, hydroxyl value, acid value and glass transition temperature of the resulting polycondensate were 1500, 2100, 502.0 mg KOH/g, 0.6 mg KOH/g and 32°C, respectively.

To this hyper-branched polymer (P1) (1000 parts) were added 1450 parts of Pine Crystal KR-85 (rosin in superlight color manufactured by Arakawa Kagaku Kogyo) and 30 parts of PTS and the mixture was made to react at 230°C for 24 hours in a nitrogen atmosphere together with evaporation of water to give a hyper-branched polymer Q1. Number-average molecular weight, weight-average molecular weight, hydroxyl value, acid value and glass transition temperature of the resulting hyper-branched polymer Q1 were 2200, 18200, 48.0 mg KOH/g, 1.8 mg KOH/g and 58°C, respectively.

Manufacturing Example of Resin (12) To the hyper-branched polymer (P1) (1000 parts) were added 2010 parts of abietic acid and 30 parts of PTS and the mixture was made to react at 230°C for 24 hours in a nitrogen atmosphere to give a hyper-branched polymer Q2.
Number-average molecular weight, weight-average molecular weight, hydroxyl value, acid value and glass transition temperature of the resulting hyper-branched polymer Q2 were 2800, 10100, 25.0 mg KOH/g, 1.4 mg KOH/g and 65°C, respectively.

### Manufacturing Example of Resin (13)

To the hyper-branched polymer (P1) (1000 parts) were added 2102 parts of Pine Crystal KR-85 and 30 parts of PTS and the mixture was made to react at 230°C for 24 hours in a nitrogen atmosphere. After that, the mixture was cooled down to 220°C in a nitrogen stream, 90 parts of trimellitic anhydride was poured hereinto and the mixture was made to react for 30 minutes to give a hyper-branched polymer Q3. Number-average molecular weight, weight-average molecular weight, hydroxyl value, acid value and glass transition temperature of the resulting hyper-branched polymer Q3 were 3100, 14300, 21.0 mg KOH/g, 11.2 mg KOH/g and 64°C, respectively.

### Manufacturing Example of Resin (14)

Synthesis of hyper-branched polymer P2 Pentaerythritol (136 parts), 4144 parts of dimethylolbutanoic acid and 21 parts of PTS were placed into a reactor equipped with partial condenser, thermometer and stirring rod and stirred at 100°C to give a uniform liquid fused product mixture. Then 100 parts of toluene was poured thereinto, the mixture was raised up to 140°C, toluene was refluxed and water generated thereby was evaporated outside the system by means of azeotropy. After the reaction was continued for five hours under the same condition, toluene was evaporated outside the system to give hyper-branched polymer P2 (which was to be a core). Number-average molecular weight, weight-average molecular weight, hydroxyl value, acid value and glass transition temperature of the resulting polycondensate were 2300, 3500, 494.0 mg KOH/g, 0.7 mg KOH/g and 40°C, respectively.

To this hyper-branched polymer (P2) (1000 parts) were added 1390 parts of Siragiku Rosin (manufactured by Arakawa Kagaku Kogyo) and 30 parts of p-toluenesulfonic acid and the mixture was made to react at 230°C for 24 hours in a nitrogen atmosphere. After that, the mixture was cooled down to 170°C, 100 parts of 5- sodium isophthalic acid dimethylester was poured hereinto and the mixture was made to react for 6 hours at 220°C to give a hyper-branched polymer Q4. Number-average molecular weight, weight-average molecular weight, hydroxyl value, acid value, concentration of metal sulfonate and glass transition temperature of the resulting hyper-branched polymer Q4 were 4200, 59000, 25.0 mg KOH/g, 1.7 mg KOH/g, 140 eq/ton and 66°C, respectively.

### Manufacturing Example of Resin (15)

Synthesis of hyper-branched polymer P3 Pentaerythritol (136 parts), 8880 parts of dimethylolbutanoic acid and 21 parts of PTS were placed into a reactor equipped with partial condenser, thermometer and stirring rod and stirred at 100°C to give a uniform liquid fused product mixture. Then 100 parts of toluene was poured thereinto, the mixture was raised up to 140°C, toluene was refluxed and water generated thereby was evaporated outside the system by means of azeotropy. After the reaction was continued for five hours under the same condition, toluene was evaporated outside the system to give hyper-branched polymer P3 (which was to be a core). Number-average molecular weight, weight-average molecular weight, hydroxyl value, acid value and glass transition temperature of the resulting polycondensate were 2800, 5100, 484.0 mg KOH/g, 0.7 mg KOH/g and 43°C, respectively.

To the hyper-branched polymer (P3) (1000 parts) were added 2300 parts of abietic acid and 30 parts of p-toluenesulfonic acid and the mixture was made to react at 230°C for 24 hours in a nitrogen atmosphere to give a hyper-branched polymer Q5. Number-average molecular weight, weight-average molecular weight, hydroxyl value, acid value and glass transition temperature of the resulting hyper-branched polymer Q5 were 2500, 8600, 15.2 mg KOH/g, 1.1 mg KOH/g and 78°C, respectively.

### Manufacturing Example of Resin (16)

Terephthalic acid (318 parts), 318 parts of isophthalic acid, 7.7 parts of trimellitic anhydride, 447 parts of ethylene glycol and 70 parts of 2-methyl-1,3-propanediol were placed into a reactor equipped with stirrer, condenser and thermometer and subjected to esterification reaction from 160°C to 230°C for 3 hours in a nitrogen atmosphere. After releasing the pressure, 0.42 part of tetrabutyl titanate was charged, the pressure in the system was gradually vacuumized down to 5 mmHg within 20 minutes and polycondensation reaction was carried out at 260°C for 40 minutes *in vacuo* (0. 3 mmHg or lower). The mixture was cooled down to 220°C in a nitrogen stream, 4 parts of trimellitic anhydride was poured hereinto and the mixture was made to react for 30 minutes. Number-average molecular weight, weight-average molecular weight, hydroxyl value, acid value and glass transition temperature of the resulting polyester resin Q6 were 9000, 21000, 10.5 mg KOH/g, 18.0 mg KOH/g and 55°C, respectively.

### Manufacturing Example of Resin (17)

Terephthalic acid (330 parts), 330 parts of isophthalic acid, 7.7 parts of trimellitic anhydride, 322 parts of ethylene glycol and 1300 parts of an adduct of bisphenol A with propylene oxide were placed into a reactor equipped with stirrer, condenser and thermometer and subjected to esterification reaction from 160°C to 230°C for 3 hours in a nitrogen atmosphere. After releasing the pressure, 0.42 part of tetrabutyl titanate was charged, the pressure in the system was gradually vacuumized down to 5 mmHg within 20 minutes and polycondensation reaction was carried out at 260°C for 40 minutes *in vacuo* (0.3 mmHg or lower). Number-average molecular weight, weight-average molecular weight, hydroxyl value, acid value and glass transition temperature of the resulting polyester resin Q7 were 3100, 9900, 18.5 mg KOH/g, 12.0mgKOH/gand56°C, respectively.

### Manufacturing Example of Resin (18)

Terephthalic acid (325 parts), 325 parts of isophthalic acid, 15. 4 parts of trimellitic anhydride, 322 parts of ethylene glycol and 1300 parts of an adduct of bisphenol A with propylene oxide were placed into a reactor equipped with stirrer, condenser and thermometer and subjected to esterification reaction from 160°C to 230°C for 3 hours in a nitrogen atmosphere. After releasing the pressure, 0.2 part of tetrabutyl titanate was charged, the pressure in the system was gradually vacuumized down to 5 mmHg within 20 minutes and polycondensation reaction was carried out at 260°C for 40 minutes *in vacuo* (0.3 mmHg or lower). Number-average molecular weight, weight-average molecular weight, hydroxyl value, acid value and glass transition temperature of the resulting polyester resin C1 were 4400, 14900, 17.5mgKOH/g, 15.0 mg KOH/g and 58°C, respectively.

### [Example 8]

To 100 parts by weight of he above resin Q1 was added 20 parts by weight of a pigment (Toner Magenta 6B manufactured by Clariant) as a coloring agent followed by well mixing by a Henschel mixer and the mixture was kneaded by a continuous two-rolled kneader (manufactured by Mitsui Mining). This kneaded product was roughly ground to an extent of about 2 mm diameter using a grinder (manufactured by Hosokawa Micron) to give a master batch QM1. To the resulting master batch (30 parts by weight) were added 76 parts by weight of the above polyester resin C1, 1 part by weight of Bontron E-81 (manufactured by Orient Kagaku Kogyo) as a CCA and 1 part by weight of carnauba wax (manufactured by Nippon Wax) as a releasing agent and the mixture was well mixed by a Henschel mixer, subjected to a fusion kneading using a biaxial extruder (manufactured by Toshiba Machinery), cooled down to ambient temperature (25°C) and ground and classified using a grinding classifying device (manufactured by Hosokawa Micron) to give mother particles where the weight D50 was 8 µm. Silica RX 200 (manufactured by Nippon Aerosil) (1.0 part by weight) was added to 100 parts of the mother particles followed by mixing using a Henschel mixer to give the toner QMT1 of Example 8.

### [Examples 9 to 12]

The same operation as in Example 8 was carried out except that hyper-branched polymers Q2 to Q5 were used instead of the hyper-branched polymer Q1 to give the pigment master batch QM2 to QM5 and the toner particles QMT2 to QMT5, respectively.

### [Example 13]

A solution containing 22 parts by weight of the hyper-branched polymer Q1 and 160 parts by weight of methyl ethyl ketone was well dissolved, then 28 parts by weight of carbon black and 300 parts by weight of zirconia beads were poured thereinto and the mixture was shaken for 12 hours using a paint shaker. The zirconia beads were removed using a mesh to give a pigment master batch QM6. Then a mixture comprising 94 parts by weight of polymethyl vinyl ether, 800 parts by weight of ethanol, 90 parts by weight of styrene, 20 parts by weight of n-butyl acrylate and 6 parts by weight of 2,2'-azobisisobutyronitrile was well dissolved in a polymerization container equipped with mechanical stirrer and introducing pipe for bubbling of nitrogen gas. The pigment master batch QM6 (70 parts by weight) was gradually poured into the above with stirring to form a polymerization reaction system. The resulting polymerization reaction system was kept at 20°C and nitrogen was subjected to bubbling thereinto until the dissolved oxygen amount in the polymerization reaction system reached 0.1 mg/liter. This was heated up to 75°C and polymerized with stirring for 12 hours. Even during the polymerization, bubbling of nitrogen was continued. After completion of the reaction, the mixture was cooled down to 20°C with stirring and the toner particle dispersion was recovered by means of decantation. The toner particle dispersion was subjected to washing with methanol and to solid-liquid separation for five times repeatedly where the dispersion was kept at 20 to 22°C throughout followed by drying to give toner particles QMT6 in black color.

### [Comparative Example 6]

To 100 parts by weight of he above polyester resin Q6 was added 20 parts by weight of a pigment (Toner Magenta 6B manufactured by Clariant) as a coloring agent followed by well mixing by a Henschel mixer and the mixture was kneaded by a continuous two-rolled kneader (manufactured by Mitsui Mining).
This kneaded product was roughly ground to an extent of about 2 mm diameter using a grinder (manufactured by Hosokawa Micron) to give a master batch QM7. To the resulting master batch (30 parts by weight) were added 76 parts by weight of the above polyester resin C1, 1 part by weight of Bontron E-81 (manufactured by Orient Kagaku Kogyo) as a CCA and 1 part by weight of carnauba wax (manufactured by Nippon Wax) as a releasing agent and the mixture was well mixed by a Henschel mixer, subjected to a fusion kneading using a biaxial extruder (manufactured by Toshiba Machinery), cooled down to ambient temperature (25°C) and ground and classified using a grinding classifying device (manufactured by Hosokawa Micron) to give mother particles where the weight D50 was 14.8 µm. Silica RX 200 (manufactured by Nippon Aerosil) (1.0 part by weight) was added to 100 parts of the mother particles followed by mixing using a Henschel mixer to give the toner QMT7 of Comparative Example 6.

### [Comparative Example 7]

The same operation as in Comparative Example 6 was carried out except that polyester resin Q7 were used instead of polyester resin Q6 to give the pigment master batch QM8 and the toner particles QMT8.

### [Comparative Example 8]

A solution containing 22 parts by weight of the polyester resin Q6 and 160 parts by weight of methyl ethyl ketone was well dissolved, then 28 parts by weight of carbon black and 300 parts by weight of zirconia beads were poured thereinto and the mixture was shaken for 12 hours using a paint shaker. The zirconia beads were removed using a mesh to give a pigment master batch QM9. Then a mixture comprising 94 parts by weight of polymethyl vinyl ether, 800 parts by weight of ethanol, 90 parts by weight of styrene, 20 parts by weight of n-butyl acrylate and 6 parts by weight of 2,2'-azobisisobutyronitrile was well dissolved in a polymerization container equipped with mechanical stirrer and introducing pipe for bubbling of nitrogen gas. The pigment master batch QM9 (70 parts by weight) was gradually poured into the above with stirring to form a polymerization reaction system. The resulting polymerization reaction system was kept at 20°C and nitrogen was subjected to bubbling thereinto until the dissolved oxygen amount in the polymerization reaction system reached 0.1 mg/liter. This was heated up to 75°C and polymerized with stirring for 12 hours. Even during the polymerization, bubbling of nitrogen was continued. After completion of the reaction, the mixture was cooled down to 20°C with stirring and the toner particle dispersion was recovered by means of decantation. The toner particle dispersion was subjected to washing with methanol and to solid-liquid separation for five times repeatedly where the dispersion was kept at 20 to 22°C throughout followed by drying to give toner particles QMT9 in black color.

### (Preparation of a Binder-Type Carrier)

In order to subject the toner prepared in the above Examples and Comparative Examples to evaluations as a two-componential developer, a binder-type carrier was prepared.
Thus, 100 parts by mass of polyester-type resin, 700 parts by mass of magnetic particles (Magnetite; manufactured by Toda Kogyo) and 2 parts by mass of carbon black (Morgal L; manufactured by Cabot) were well mixed using a Henschel mixer and subjected to fusion kneading using a biaxial extrusion kneader where temperature of the cylinder and the cylinder head was set at 180°C and 170°C, respectively. The kneaded product was cooled, then roughly ground using a hammer mill, finely ground using a jet grinder and classified to give a binder-type carrier where volume-average particle diameter was 40 µm.

### [Evaluation Method]

In the Examples, properties of the pigment master batch and properties of the toner were measured as follows.

### (Method for evaluation of pigment master batch characteristic)

The pigment master batch was dissolved in tetrahydrofuran (THF) to an extent of 10% concentration, an appropriate amount thereof was dropped onto a prepared slide followed by being covered with a cover glass so that the solvent was not evaporated and, under such a state, observation and evaluation were carried out based on images from a transmission electron microscope.
○○: No aggregate was noted.
○: Some aggregates were noted (having no problem in quality).
Δ: Aggregates were noted (having problem in quality).
×: Many aggregates were noted.

### (Method for evaluation of toner characteristic)

Volume-average particle diameter
Volume-average particle diameter was measured using a Coulter counter LS13 320 (manufactured by BECKMAN).

Resistance to heat Toner (10 g) was allowed to stand for 24 hours under the high temperature of 50°C and checked by naked eye to evaluate.
○: No aggregate was noted at all.
Δ: Less than 10 aggregates were noted.
: 10 or more aggregates were noted.

In the following evaluations, a developer where toner and carrier were mixed so as to make the toner concentration 6% by mass was used.

Stability of the charge amount in environment Charged amount of the developer stored for 24 hours under the environment of low temperature and low humidity (10°C, 15%) and charged amount of the developer stored for 24 hours under the environment of high temperature and high humidity (30°C, 85%) were measured by a blow-off method and the difference in the measured values was used for evaluating the stability of the charge amount in environment.
○: Absolute value of the difference was not more than 7 µC/g.
: Absolute value of the difference was more than 7 µC/g.

Degree of the coloration Fixing was conducted on white paper for single color each under the condition where image concentration was 1.0 mg/cm² and fixing temperature was 160°C and degree of coloration was measured using a Macbeth concentration meter (RD-514). When the measured value was higher, degree of the coloration was higher.

Fixing property Fixing property was evaluated from anti-peeling property and from anti-offsetting property as a whole.
○: Result of all items was "○○" or "○".
Δ: "Δ" existed in addition to "○○" or "○".
×: At least one "×" existed.

Anti-peeling property Fixing temperature was changed within a range of 80 to 130°C at 2°C-intervals and a sold image of 1. 5 cm × 1. 5 cm (adhered amount: 2.0 mg/cm²) was taken using a digital copier (DIALTA Di350; manufactured by Minolta) equipped with an oilless fixing device, each image was folded into two at its center and the anti-peeling property of the image was evaluated by naked eye. The temperature between the fixing temperature where the image was somewhat peeled off and the fixing temperature where the image was not peeled off at all was defined as the lower limit temperature of fixing.
○○: Lower limit temperature of fixing was lower than 102°C.
○: Lower limit temperature of fixing was not lower than 102°C and was lower than 106°C.
Δ: Lower limit temperature of fixing was not lower than 106°C and was lower than 112°C.
×: Lower limit temperature of fixing was not lower than 112°C.

Anti-offset property Fixing system speed of a digital copier (DIALTA Di350; manufactured by Minolta) was made 1/2 and fixing temperature was changed within a range of 90°C to 150°C with 5°C-intervals to take an image in half tone, the offset state was observed by naked eye and the temperature where a high-temperature offset was generated (offset temperature) was evaluated.
○○: offset temperature was not lower than 128°C.
○: offset temperature was not lower than 120°C and was lower than 128°C.
Δ: offset temperature was not lower than 115°C and was lower than 120°C.
×: offset temperature was lower than 115°C.

Anti-stress property Anti-stress property was evaluated by checking whether the phenomenon where the crushed or abraded toner particles by a continuous use of toner were adhered on the surface of an organic photoconductor in a thin layer happened or not.

Properties of the toners of the above Examples 8 to 13 and Comparative Examples 6 to 8 are shown in Table 2.
It is noted from Table 2 that the pigment master batch of a hyper-branched polymer type according to the present invention exhibits very good dispersibility for the pigment and further that the toner using the same is particularly excellent in coloring property, heat resisting property and fixing property

**[Table 2]**

| | Pigment master batch | Pigment dispersing condition | Toner particles | Volume-average particle diameter (µm) | Result of evaluation | | | | |
|---|---|---|---|---|---|---|---|---|---|
| | | | | | Degree of the coloration | Resistance to heat | Stability of the charge amount in environment | Fixing property | Anti-stress property |
| Example 8 | QM1 | ○○ | QMT1 | 8.5 | 2.1 | ○ | ○ | ○ | ○ |
| Example 9 | QM2 | ○○ | QMT2 | 8.8 | 2.2 | ○ | ○ | ○ | ○ |
| Example 10 | QM3 | ○○ | QMT3 | 9.1 | 2.1 | ○ | ○ | ○ | ○ |
| Example 11 | QM4 | ○○ | QMT4 | 7.4 | 2.2 | ○ | ○ | ○ | ○ |
| Example 12 | QM5 | ○○ | QMT5 | 8.3 | 2.2 | ○ | ○ | ○ | ○ |
| Example 13 | QM6 | ○○ | QMT6 | 7.5 | 2.3 | ○ | ○ | ○ | ○ |
| Comparative Example 6 | QM7 | × | QMT7 | 14.3 | 1.5 | ○ | × | × | △ |
| Comparative Example 7 | QM8 | ○ | QMTB | 9.5 | 2.1 | × | × | △ | × |
| Comparative Example 8 | AM9 | × | QMT9 | 8.2 | 1.7 | × | × | △ | △ |

### Industrial Applicability

The present invention relates to a rosin-modified hyper-branched polymer having excellent resin strength, good anti-blocking property and little dependency on environments. Toner which is prepared using the rosin-modified hyper-branched polymer of the present invention makes a large contribution to industry, because it has a good stability of the charge amount in environment while good heat-resisting storability and mechanical strength are still maintained and, moreover, due to its specific structure, a toner which has very good fixing property at low temperature as compared with the conventional resins can be achieved.
In addition, according to the pigment master batch of the present invention, it is possible to provide a pigment master batch having very good pigment dispersibility by using a hyper-branched polymer as a resin. Further, since the interaction between molecules of the hyper-branched polymer is little, its viscosity is low and pigment concentration can be made high and, moreover, kneading with low shear and for short time is possible whereby the productivity can be significantly improved. In addition, the pigment master batch is a very useful for use as a toner, because it uses hyper-branched polymer where dependency on environment is little, and both resin strength and handling property are excellent.

## Claims

1. A hyper-branched polymer of an ester type which is **characterized by** being modified with rosin.

2. The hyper-branched polymer of an ester type according to claim 1, wherein number-average molecular weight is 1,000 to 60,000, hydroxyl value is 2 to 450 mg KOH/g, acid value is 1 to 70 mg KOH/g, and glass transition temperature is not lower than 30°C.

3. A toner for electrophotography using the hyper-branched polymer of an ester type according to claim 1 or 2.

4. A pigment master batch containing at least pigment and the hyper-branched polymer of an ester type according to claim 1 or 2.
